# EUROPEAN PATENT SPECIFICATION

(11) **EP 3 640 014 B1**
(45) Date of publication and mention of the grant of the patent: **07.06.2023**
(21) Application number: 17908245.8
(22) Date of filing: 10.07.2017
(51) Int. Cl.: B29C 55/14, B29D 7/01, C08L 27/18, B01D 67/00, B29C 55/18

(54) **REINFORCED MEMBRANE FOR SEPARATION IN BATTERY AND PREPARATION METHOD THEREFOR**
VERSTÄRKTE MEMBRAN ZUR TRENNUNG IN EINER BATTERIE UND HERSTELLUNGSVERFAHREN DAFÜR
MEMBRANE RENFORCÉE POUR UNE SÉPARATION DANS UNE BATTERIE ET PROCÉDÉ DE PRÉPARATION ASSOCIÉ

(30) Priority: 04.05.2017 CN 201710306384
(43) Date of publication of application: 22.04.2020
(73) Proprietor: Li, Zhaohui, Ningbo, Zhejiang 315000 (CN)
(72) Inventor: Li, Zhaohui, Ningbo, Zhejiang 315000 (CN)
(74) Representative: Murgitroyd & Company
(86) International application number: PCT/CN2017/000425
(87) International publication number: WO 2018/201264

(56) References cited:
- EP-A1- 0 808 648
- EP-A1- 1 905 586
- EP-A1- 3 065 209
- EP-A1- 3 075 767
- EP-A2- 2 000 499
- CN-A- 103 937 133
- CN-A- 104 043 347
- CN-A- 104 415 672
- CN-A- 106 239 925
- US-A- 4 110 392

## Description

### Field of the Invention

The present invention relates to the technical field of manufacturing enhanced membranes for battery isolation.

### Description of the Prior Art

The membrane technology is an internationally-recognized green and energy-saving high-tech in the 21st century. At present, the strategies for controlling and solving global warming, energy shortage, water shortage and environmental pollution are all closely related to the membrane technology.

As a green technology developed on the basis of bionics, the membrane is a chemical composite material that is artificially synthesized by imitating the functions of the cell membrane and that is characterized by selective separation. Depending upon the application of membranes, the membranes can be classified into reverse osmosis membranes, nanofiltration membranes, ultrafiltration membranes, microfiltration membranes, gas separation membranes, pervaporation membranes, ion exchange membranes, proton exchange membranes, molecular diffusion membranes, electrodialysis membranes, membrane reactors, membrane catalysts, etc. The e-PTFE microfiltration membrane has the following performances: resistance to chemicals, heat resistance, low friction coefficient, high toughness, and high electrical insulation. At present, in addition to wide applications in fields such as pharmacy, chemical industry, petroleum, dye, textile, printing and dyeing, papermaking, electronics, food, beverage, metallurgy, agriculture, water treatment, air purification, biotechnology and environment protection engineering, the e-PTFE microfiltration membrane has attracted more and more attention and is increasingly applied in commercial battery isolation membranes such as enhanced membranes for isolation of lithium-ion batteries and fuel batteries.

The performance of the isolation membrane material is directly related to the performance and service life of batteries, and plays a decisive role in the operation of batteries. By taking a lithium-ion battery isolation membrane as an example, the microfiltration membrane made of polytetrafluoroethylene has the performances required by the battery isolation membrane, such as high porosity, low resistance, high puncture resistance and high elasticity, as well as good chemical stability and thermal stability. The microfiltration membrane is stable in a highly acidic, highly alkaline or highly oxidative-reductive environment at a battery application temperature, and has better performances than the currently commercialized polyethylene and polypropylene microporous membranes. Particularly, the excellent resistance to oxidation and reduction is more advantageous to the improvement of the service life and safety in use of batteries. Thus, the polytetrafluoroethylene microporous membrane can be used as an excellent base membrane material to replace polyethylene or polypropylene isolation membranes for reinforcement. With regard to a fuel battery isolation membrane, due to the water absorption and swelling of the perfluorosulfonic acid membrane, the membrane may have some failure behaviors (e.g., creep behaviors, transition conditions for dry and wet states, etc.) in the fuel battery. Therefore, how to suppress the swelling of the membrane or improve the mechanical strength of the membrane is one of key technologies of proton exchange membranes for fuel batteries. Nafion/PTFE composite membranes enhanced by e-PTFE microfiltration membranes can improve the mechanical strength and dimensional stability and can also reduce the internal resistance of batteries, improve the performances of batteries and significantly reduce the cost, so they become a development trend of the commercial application of battery isolation membranes in the future. The e-PTFE membrane with appropriate performances is the basis for the enhanced battery isolation membrane, and the e-PTFE microfiltration membrane is required to have excellent mechanical strength, biaxial balanced elastic modulus, chemical stability, higher porosity, and uniform membrane body.

Upon investigation, a Chinese Patent CN101958409A (Application No. CN201010289759.8) has disclosed a lithium battery isolation membrane, wherein the disclosed isolation membrane is made of single-layer polyethylene or single-layer polypropylene, or a composite material of polyethylene or polypropylene; and the isolation membrane has a thickness of 15 to 30 µm, a porosity of 47% to 58%, an air permeability of 60 to 220 S/cc and an average pore diameter of 0.15 to 0.25 µm.

Moreover, a Chinese Patent CN102208588A (Patent No. CN201010613711.8) has disclosed a battery isolation membrane, wherein the battery isolation membrane has a thickness of 16 to 35 µm, a micropore diameter of 0.3 to 0.65 µm and a porosity of 40% to 50%; the battery isolation membrane is manufactured from polymer compositions, including: (a) a mixture of ultrahigh molecular weight polyethylene having a molecular weight of 1.5×10⁶ to 7.5×10⁶ and high density polyethylene having a density of above 0.945 g/ cm³, the weight ratio of the ultrahigh molecular weight polyethylene to the high density polyethylene is 1: 1-20; (b) based on total 100 parts by weight of the ultrahigh molecular weight polyethylene and the high density polyethylene, 500 to 2000 parts by weight of a pore forming agent; and (c) based on total 100 parts by weight of the ultrahigh molecular weight polyethylene and the high density polyethylene, 0.5 to 20 parts by weight of an antioxidant. A similar prior art technology is disclosed in EP3075767.

The two battery isolation membranes are manufactured from materials such as polyethylene and polypropylene. Although the requirements for performance are satisfied, compared with biaxially-oriented expanded polytetrafluoroethylene enhanced membranes, other isolation membranes cannot tolerate the highly oxidative environment of free radicals in the battery and will be quickly degraded. This is the reason why the biaxially-oriented expanded polytetrafluoroethylene enhanced membranes are currently developed worldwide as battery isolation membranes.

### Summary of the Invention

A first technical problem to be solved by the present invention is to provide an enhanced membrane for battery isolation, which is a biaxially-oriented expanded polytetrafluoroethylene microfiltration membrane and has the characteristics of regular membrane fiber arrangement, less nodules, high porosity, excellent mechanical performance, high creep resistance, high hardness and high dimensional stability.

A second technical problem to be solved by the present invention is to provide a method for manufacturing an enhanced membrane for battery isolation, by means of extrusion by a fishtail-type die, multi-pass ultrahigh-temperature and high-speed stretching, heat treatment and cooling, ultrahigh-temperature shaping by a hot air furnace and other procedures. The manufactured enhanced membrane has the characteristics of regular membrane fiber arrangement, less nodules, high porosity, excellent mechanical performance, high creep resistance, high hardness and high dimensional stability.

To achieve the first technical problem, the enhanced membrane for battery isolation, characterized in that, the battery isolation is a biaxially-oriented expanded polytetrafluoroethylene microfiltration membrane, with a longitudinal tensile strength of 25 to 30 MPa, a transverse tensile strength of 20 to 25 MPa, a longitudinal elastic modulus of 70 to 80 MPa, a transverse elastic modulus of 50 to 60 MPa, and a maximum longitudinal and transverse force of 3 to 4 N.

To achieve the second technical problem, the method for manufacturing an enhanced membrane for battery isolation comprises following steps:
(1) mixing: adding, in a proportion of 23% to 27%, an isoparaffin lubricant (e.g. Isopar) to polytetrafluoroethylene (PTFE) powder, stirring uniformly, sieving and pouring the mixture into an insulation barrel, and maintaining at 40°C to 80°C for 24h to 48h;
(2) pressing: at a pressure of 2 to 10 MPa, pressing the temperature-maintained PTFE powder into a cylindrical blank;
(3) extruding: extruding the cylindrical blank at 40°C to 80°C through a fishtail-type die to form a continuous tape-like membrane having a width of 170 to 190 mm and a thickness of 1.8 to 2.2 mm;
(4) rolling: by keeping the width of the membrane unchanged, rolling the membrane in a longitudinal direction to obtain a PTFE tape-like membrane having a thickness of 0.18 to 0.22 mm;
(5) removing the lubricant: drying the PTFE tape-like membrane at 200°C to 250°C to remove the lubricant;
(6) multi-pass high-speed longitudinal stretching: performing multi-pass high-speed longitudinal stretching at a certain temperature, performing a heat treatment at a temperature exceeding the melting point of PTFE, then cooling and shaping at a low temperature;
(7) high-speed transverse stretching: performing high-speed transverse stretching at a certain temperature to expand PTFE, after the transverse stretching, rapidly heating PTFE to a temperature exceeding the melting point of PTFE and preserving this temperature for a certain period of time, shaping in a ultrahigh-temperature hot air furnace, and rapidly cooling.

Preferably, in the step (6), the temperature for the multi-pass high-speed longitudinal stretching is 100°C to 300°C, the longitudinal stretching is performed for 5 times, the longitudinal stretch ratio is 1 to 640, the speed for each longitudinal stretching is 30 to 50 m/min, the temperature for heat treatment after each longitudinal stretching is 327°C to 800°C, and the temperature for low-temperature cooling and shaping is 0°C to 10°C.

Preferably, during the multi-pass high-speed longitudinal stretching of the step (6), the first longitudinal stretching is performed at a stretch ratio of 1, the second longitudinal stretching is performed at a stretch ratio of 2, the third longitudinal stretching is performed at a stretch ratio of 4, the fourth longitudinal stretching is performed at a stretch ratio of 8, and the fifth longitudinal stretching is performed at a stretch ratio of 10.

Preferably, in the step (7), the temperature for the high-speed transverse stretching is 100°C to 300°C, and the stretching speed is 30 to 50 m/min.

Preferably, in the step (7), the temperature for ultrahigh-temperature shaping in the hot air furnace is 327°C to 800°C, and the temperature for low-temperature cooling and shaping is 0°C to 10 °C.

Preferably, during mixing materials in the step (1), the added isoparaffin lubricant is in a proportion of 25%.

Preferably, during extruding in the step (3), the cylindrical blank is extruded to obtain a continuous tape-like membrane having a width of 180 mm and a thickness of 2.0 mm.

Preferably, in the step (4), the membrane is rolled to obtain a PTFE tape-like membrane having a thickness of 0.2 mm.

Preferably, in the step (7), after the transverse stretching, the membrane is rapidly heated to a temperature exceeding the melting point of PTFE and maintained at this temperature for a certain period of time, which is 2s to 6s, more preferably 3s to 5s.

Compared with the prior art, the present invention has the following advantages. A biaxially-oriented expanded polytetrafluoroethylene microfiltration membrane is used as the enhanced membrane for battery isolation. During the manufacturing, a fishtail-type die is used for extrusion, so it is easier for formation of fibers and there are few small nodules. Then, by multi-pass longitudinal stretching, heat treatment at a temperature exceeding a normal melting point and cooling processes, the regular crystal arrangement gradually disappears at a temperature higher than the melting point of PTFE. At the beginning of cooling, the regular molecular arrangement is generated to form a structural membrane with a regular crystal arrangement. Then, by setting a rational stretch ratio, the tensile strength in the longitudinal and transverse directions is balanced; and the membrane is instantly solidified into a semi-sintered state by ultrahigh-temperature shaping in a hot air furnace, so that both the strength and the elastic modulus are improved and the surface of the membrane becomes smooth. The expanded polytetrafluoroethylene membrane manufactured by the present invention has the following characteristics: the diameter of nodules is less than 0.3 µm, the average fiber diameter is 0.1 to 0.3 µm, the pore diameter is 0.15 to 0.25 µm, the thickness is 5 to 60 µm, and the porosity is 70% to 90%. The polytetrafluoroethylene microfiltration membrane manufactured by the present invention is applicable to enhanced membranes for isolating power batteries such as lithium-ion batteries and fuel batteries. Moreover, due to its small nodules, small pore diameter and high porosity, the polytetrafluoroethylene microfiltration membrane can enable the perfluorosulfonic acid resin to be easily and evenly permeated. Accordingly, the electrical conductivity is improved. The fibers formed by the microfiltration membrane are straight and have a small difference between longitudinal and transverse (MD/TD) elastic moduli, so that the elastic modulus and strength of the enhanced perfluorosulfonic proton exchange membrane are improved, the swelling ratio is greatly reduced, and the service life of batteries is thus prolonged. The perfluorosulfonic proton exchange membrane manufactured by the present invention has a small difference (which is 300 to 500 MPa) between longitudinal and transverse (MD/TD) elastic moduli, a tensile strength of 25 to 40 MPa, a swelling ratio of less than 5% and an electrical conductivity of 50 to 80 mS/cm. The membrane has been operated normally for more than 500 hours in an electric pile. The perfluorosulfonic proton exchange membrane manufactured by the present invention has better dimensional stability and higher mechanical performance, and can significantly reduce the internal resistance of batteries and improve the performance of batteries, reduce the consumption of membrane materials, reduce the cost, and thus have a wide range of application.

### Brief Description of the Drawings

Fig. 1 is a Scanning Electron Microscopic (SEM) diagram of a morphological structure of an e-PTFE membrane manufactured according to Embodiment 1 of the present invention;
Fig. 2 is an SEM diagram of a morphological structure of an e-PTFE membrane manufactured by a conventional technology; and

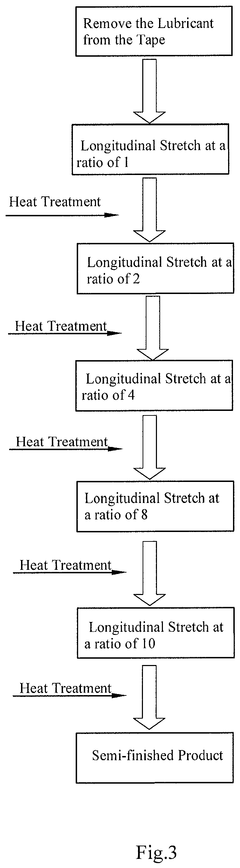

Fig. 3 is a flowchart of multi-pass stretching and heat treatment during the manufacturing of the e-PTFE membrane according to Embodiment 1 of the present invention.

### Detailed Description of the Preferred Embodiment

To enable a further understanding of the present invention content of the invention herein, refer to the detailed description of the invention and the accompanying drawings below:

### Embodiment 1

Material: 601A PTFE powder from DuPont.

### Processing steps:

Mixing - pressing - extruding - rolling - removing the lubricant - longitudinally stretching for multiple times - heat treatment - cooling and shaping - transversely stretching - thermally shaping - cooling and shaping.

### Detail steps:

(1) Mixing: adding, in a proportion of 25%, an isoparaffin lubricant to a proper amount of polytetrafluoroethylene (PTFE) powder, stirring uniformly, sieving and pouring the mixture into an insulation barrel, and maintaining at 40°Cfor 24h.
(2) Pressing: at a pressure of 2 MPa, pressing the temperature-maintained PTFE powder into a cylindrical blank.
(3) Extruding: extruding the cylindrical blank at 40°C through a fishtail-type die to form a continuous tape-like membrane having a width of 180 mm and a thickness of 2.2 mm.
(4) Rolling: by keeping the width of the membrane unchanged, rolling the membrane in a longitudinal direction to obtain a PTFE tape-like membrane having a thickness of 0.2 mm.
(5) Removing the lubricant: drying the PTFE tape-like membrane at 200°C to remove the lubricant.
(6) Multi-pass high-speed longitudinal stretching: performing multi-pass high-speed longitudinal stretching at a certain temperature, performing a heat treatment at a temperature exceeding the melting point of PTFE, and cooling and shaping the membrane at a low temperature.
(7) High-speed transverse stretching: performing high-speed transverse stretching at a certain temperature to expand PTFE, after the transverse stretching, rapidly heating PTFE to a temperature exceeding the melting point of PTFE and preserving this temperature for 2s to 6s (preferably 3s to 5s), shaping in an ultrahigh-temperature hot air furnace, and rapidly cooling.

In the step (6), the temperature for the multi-pass high-speed longitudinal stretching is 200°C, the longitudinal stretching is performed for 5 times, the longitudinal stretch ratio is 640, the speed for each longitudinal stretching is 40 m/min, the temperature for heat treatment after each longitudinal stretching is 450°C, and the temperature for low-temperature cooling and shaping is 5°C.

During the multi-pass high-speed longitudinal stretching of the step (6), the first longitudinal stretching is performed at a stretch ratio of 1, the second longitudinal stretching is performed at a stretch ratio of 2, the third longitudinal stretching is performed at a stretch ratio of 4, the fourth longitudinal stretching is performed at a stretch ratio of 8, and the fifth longitudinal stretching is performed at a stretch ratio of 10.

In the step (7), the temperature for the high-speed transverse stretching is 200°C, and the stretching speed is 40 m/min.

In the step (7), the temperature for ultrahigh-temperature shaping in the hot air furnace is 500°C. The temperature for low-temperature cooling and shaping is 5°C.

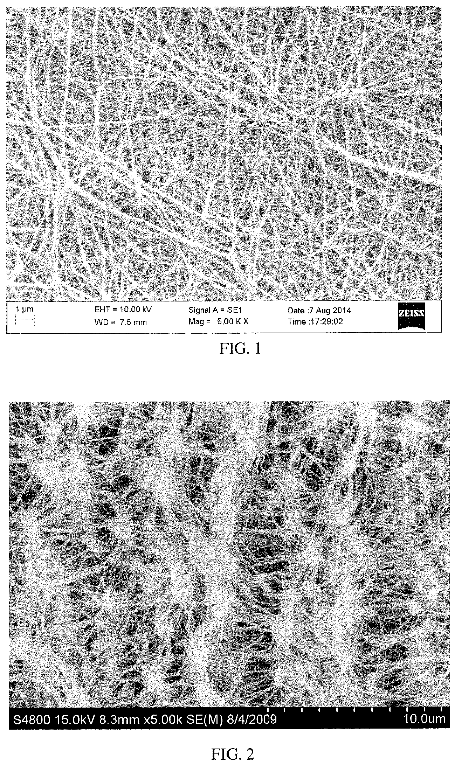

The morphological structure of the manufactured e-PTFE membrane is shown in Fig. 1, and the performance of the manufactured e-PTFE membrane is shown in Table 1 below.

**Table 1:**

| Test item | Embodiment 1 | |
|---|---|---|
| Pore diameter (µm) | 0.15-0.2µm | |
| Porosity (%) | 75-90% | |
| Air permeability (L/m2.s)@127pa | 5-8 | |
| Membrane thickness (µm) | 10-15 | |

| | Longitudinal direction | Transverse direction |
|---|---|---|
| Tensile strength (MPa) | 25-30 | 20-25 |
| Elastic modulus (MPa) | 70-80 | 50-60 |
| Maximum force (N) | 3-4 | 3-4 |

It can be seen from Fig. 1 that, by the multi-pass stretching and heat treatment technologies of the present invention, and by stretching and thermally shaping at a temperature extending the normal melting point, the e-PTFE membrane can have a regular fiber arrangement, a significantly decreased number of nodules, a narrow distribution of pore diameter of the membrane and a significantly improved uniformity. It can be seen from Table 1 that the membrane has high porosity, excellent mechanical performance, good creep resistance, high hardness and dimensional stability, and approximate biaxial strengths in longitudinal and transverse directions (MD/TD).

### Embodiment 2

Material: F106CPPTFE powder from Daikin.

Processing steps: Mixing - pressing - extruding - rolling - removing the lubricant - longitudinally stretching-heat treatment - cooling and shaping - transversely stretching - thermally shaping - cooling and shaping.

### Detail steps:

(1) Mixing: adding, in a proportion of 25%, an isoparaffin lubricant to a proper amount of polytetrafluoroethylene (PTFE) powder, stirring uniformly, sieving and pouring the mixture into an insulation barrel, and maintaining at 60°C for 36h.
(2) Pressing: at a pressure of 6 MPa, pressing the temperature-maintained PTFE powder into a cylindrical blank.
(3) Extruding: extruding the cylindrical blank at 60°C through a fishtail-type die to form a continuous tape-like membrane having a width of 180 mm and a thickness of 2.0 mm.
(4) Rolling: by keeping the width of the membrane unchanged, rolling the membrane in a longitudinal direction to obtain a PTFE tape-like membrane having a thickness of 0.2 mm.
(5) Removing the lubricant: drying the PTFE tape-like membrane at 225°C to remove the lubricant.
(6) Multi-pass high-speed longitudinal stretching: performing multi-pass high-speed longitudinal stretching at a certain temperature, performing a heat treatment at a temperature exceeding the melting point of PTFE, and cooling and shaping the membrane at a low temperature.
(7) High-speed transverse stretching: performing high-speed transverse stretching at a certain temperature to expand PTFE, after the transverse stretching, rapidly heating PTFE to a temperature exceeding the melting point of PTFE and preserving this temperature for 2s to 6s (preferably 3s to 5s), shaping in a ultrahigh-temperature hot air furnace, and rapidly cooling.

In the step (6), the temperature for the multi-pass high-speed longitudinal stretching is 100°C, the longitudinal stretching is performed for 5 times, the longitudinal stretch ratio is 120, the speed for each longitudinal stretching is 30 to 50 m/min, the temperature for heat treatment after each longitudinal stretching is 327°C, and the temperature for low-temperature cooling and shaping is 0°C.

During the multi-pass high-speed longitudinal stretching, the first longitudinal stretching is performed at a stretch ratio of 1, the second longitudinal stretching is performed at a stretch ratio of 2, the third longitudinal stretching is performed at a stretch ratio of 3, the fourth longitudinal stretching is performed at a stretch ratio of 4, and the fifth longitudinal stretching is performed at a stretch ratio of 5.

In the step (7), the temperature for the high-speed transverse stretching is 100°C, and the stretching speed is 30 m/min.

Finally, in the step (7), the temperature for ultrahigh-temperature shaping in the hot air furnace is 327°C. The temperature for low-temperature cooling and shaping is 0°C.

The performance of the manufactured e-PTFE membrane is shown in Table 2 below.

**Table 2:**

| Test item | Embodiment 2 | |
|---|---|---|
| Pore diameter (µm) | 0.15-0.2µm | |
| Porosity (%) | 75-85% | |
| Air permeability (L/m2.s) | 2-3 | |
| Thickness (µm) | 50-60 | |
| | | |

| | Longitudinal direction | Transverse direction |
|---|---|---|
| Tensile strength (MPa) | 25-30 | 20-35 |
| Elastic modulus (MPa) | 70-80 | 50-60 |
| Maximum force (N) | 3-4 | 3-4 |

The test method in the present invention is shown in Table 3 below.

**Table 3**

| Test item | Test criteria | Sampling method |
|---|---|---|
| Pore diameter (µm) | HYT 039-1995 Microfiltration membrane performance test method | Bubble point method |
| Air permeability (L/m2. s) | GB5453-1985 Measurement of air permeability of textile fabrics | Pressure: 127 Pa; sampling area: 38 cm |
| Thickness (µm) | GB/T6672-2001 Mechanical thickness measurement of plastic | Japanese Mitoyo dial gauge; Model: 7327 |
| | membranes and sheets | |
| Tensile strength (MPa) | GB/T 1040.3-2006 Measurement of plastic tensile performance Section 3: Test conditions for membranes and sheets according to GB/T 1040.1-2006 | Standard, length in 150 mm, width in 20 mm; original scale distance: 100 mm; speed: 20 mm/min |
| Modulus (MPa) | | |
| Maximum force (N) | | |

### Embodiment 3

Material: 601APTFE power from DuPont.

### Processing steps:

Mixing - pressing - extruding - rolling - removing the lubricant - longitudinally stretching - heat treatment - cooling and shaping - transversely stretching - thermally shaping - cooling and shaping.

### Detail steps:

(1) Mixing: adding, in a proportion of 25%, a lubricant Isopar to a proper amount of polytetrafluoroethylene (PTFE) powder, stirring uniformly, sieving and pouring the mixture into an insulation barrel, and maintaining at 80°Cfor 48h.
(2) Pressing: at a pressure of 10 MPa, pressing the temperature-maintained PTFE powder into a cylindrical blank.
(3) Extruding: extruding the cylindrical blank at 80°Cthrough a fishtail-type die to form a continuous tape-like membrane having a width of 180 mm and a thickness of 2.0 mm.
(4) Rolling: by keeping the width of the membrane unchanged, rolling the membrane in a longitudinal direction to obtain a PTFE tape-like membrane having a thickness of 0.2 mm.
(5) Removing the lubricant: drying the PTFE tape-like membrane at 250°C to remove the lubricant.
(6) Multi-pass high-speed longitudinal stretching: performing multi-pass high-speed longitudinal stretching at a certain temperature, performing a heat treatment at a temperature exceeding the melting point of PTFE, and cooling and shaping the membrane at a low temperature.
(7) High-speed transverse stretching: performing high-speed transverse stretching at a certain temperature to expand PTFE, after the transverse stretching, rapidly heating PTFE to a temperature exceeding the melting point of PTFE and preserving this temperature for 2s to 6s (preferably 3s to 5s), shaping in a ultrahigh-temperature hot air furnace, and rapidly cooling.

In the step (6), the temperature for the multi-pass high-speed longitudinal stretching is 300°C, the longitudinal stretching is performed for 5 times, the longitudinal stretch ratio is 1, the speed for each longitudinal stretching is 30 to 50 m/min, the temperature for heat treatment after each longitudinal stretching is 327°C to 800°C, and the temperature for low-temperature cooling and shaping is 0 to 10°C.

During the multi-pass high-speed longitudinal stretching, the first longitudinal stretching is performed at a stretch ratio of 1, the second longitudinal stretching is performed at a stretch ratio of 2, the third longitudinal stretching is performed at a stretch ratio of 1, the fourth longitudinal stretching is performed at a stretch ratio of 1, and the fifth longitudinal stretching is performed at a stretch ratio of 1.

In the step (7), the temperature for the high-speed transverse stretching is 300°C, and the stretching speed is 50 m/min.

Finally, in the step (7), the temperature for ultrahigh-temperature shaping in the hot air furnace is 800°C. The temperature for low-temperature cooling and shaping is 10°C.

The morphological structure of the manufactured e-PTFE membrane is shown in Fig. 1, and the performance of the manufactured e-PTFE membrane is shown in Table 4 below.

**Table 4:**

| Test item | Embodiment 3 | |
|---|---|---|
| Pore diameter (µm) | 0.18-0.25µm | |
| Porosity (%) | 80-90% | |
| Air permeability (L/m2.s)@127pa | 6-8 | |
| Membrane thickness (µm) | 8-12 | |

| | Longitudinal direction | Transverse direction |
|---|---|---|
| Tensile strength (MPa) | 22-28 | 17-22 |
| Elastic modulus (MPa) | 65-75 | 48-55 |
| Maximum force (N) | 2.5-3.5 | 2.5-4.5 |

### Embodiment 4

Material: 601APTFE power from DuPont.

### Processing steps:

Mixing - pressing - extruding - rolling - removing the lubricant - longitudinally stretching - heat treatment - cooling and shaping - transversely stretching - thermally shaping - cooling and shaping.

### Detail steps:

(1) Mixing: adding, in a proportion of 25%, a lubricant Isopar to a proper amount of polytetrafluoroethylene (PTFE) powder, stirring uniformly, sieving and pouring the mixture into an insulation barrel, and maintaining at 40°C to 80°Cfor 24h.
(2) Pressing: at a pressure of 8 MPa, pressing the temperature-maintained PTFE powder into a cylindrical blank.
(3) Extruding: extruding the cylindrical blank at 40°C through a fishtail-type die to form a continuous tape-like membrane having a width of 180 mm and a thickness of 2.0 mm.
(4) Rolling: by keeping the width of the membrane unchanged, rolling the membrane in a longitudinal direction to obtain a PTFE tape-like membrane having a thickness of 0.2 mm.
(5) Removing the lubricant: drying the PTFE tape-like membrane at 200°C to 250°C to remove the lubricant.
(6) Multi-pass high-speed longitudinal stretching: performing multi-pass high-speed longitudinal stretching at a certain temperature, performing a heat treatment at a temperature exceeding the melting point of PTFE, and cooling and shaping the membrane at a low temperature.
(7) High-speed transverse stretching: performing high-speed transverse stretching at a certain temperature to expand PTFE, after the transverse stretching, rapidly heating PTFE to a temperature exceeding the melting point of PTFE and preserving this temperature for 2s to 6s (preferably 3s to 5s), shaping in a ultrahigh-temperature hot air furnace, and rapidly cooling.

In the step (6), the temperature for the multi-pass high-speed longitudinal stretching is 200°C, the longitudinal stretching is performed for 5 times, the longitudinal stretch ratio is 384, the speed for each longitudinal stretching is 30 to 50 m/min, the temperature for heat treatment after each longitudinal stretching is 327°C to 800°C, and the temperature for low-temperature cooling and shaping is 0 to 10°C.

During the multi-pass high-speed longitudinal stretching, the first longitudinal stretching is performed at a stretch ratio of 1, the second longitudinal stretching is performed at a stretch ratio of 2, the third longitudinal stretching is performed at a stretch ratio of 4, the fourth longitudinal stretching is performed at a stretch ratio of 6, and the fifth longitudinal stretching is performed at a stretch ratio of 8.

In the step (7), the temperature for the high-speed transverse stretching is 300°C, and the stretching speed is 40 m/min.

Finally, in the step (7), the temperature for ultrahigh-temperature shaping in the hot air furnace is 800°C. The temperature for low-temperature cooling and shaping is 2°C.

The morphological structure of the manufactured e-PTFE membrane is shown in Fig. 1, and the performance of the manufactured e-PTFE membrane is shown in Table 5 below.

**Table 5:**

| Test item | Embodiment 4 | |
|---|---|---|
| Pore diameter (µm) | 0.12-0.18µm | |
| Porosity (%) | 65-83% | |
| Air permeability (L/m2.s)@127pa | 2-4 | |
| Membrane thickness (µm) | 12-25 | |

| | Longitudinal direction | Transverse direction |
|---|---|---|
| Tensile strength (MPa) | 32-38 | 25-32 |
| Elastic modulus (MPa) | 76-85 | 55-68 |
| Maximum force (N) | 4-5 | 3.6-4.5 |

The manufacturing process of the present invention is compared with the existing conventional manufacturing process in the following tables.
I. Table 6 shows the comparison of the manufacturing process of the present invention with the existing conventional manufacturing process.

**Table 6**

| Comparison of manufacturing steps and conditions | | | | |
|---|---|---|---|---|
| Item | | | Manufacturing steps in the present invention | Conventional manufacturing steps |
| Manufacturing step | | | Mixing -pressing -extru ding-rolling-removing the lubricant-longitudinall y stretching for multiple times-heat treatment-cooling and shaping-transversely stretching-thermally shaping-cooling and shaping | Mixing-pressing-extruding-rolling -removing the lubricant-longitu dinally stretching-heat treatment-transve rsely stretching |
| Manufactu ring condition | Longitudinal direction | Stretch ratio | 1-640 | 0-15 |
| | | Cooling temperature | 0-10°C | / |
| | | Stretching speed | 30-50 m/min | / |
| | | Thermal treatment temperature | 327-800°C | / |
| | | Stretching temperature | 100-300°C | / |
| | | The number of stretching times | 5 times | 1 times |
| | Transverse direction | Stretching speed | 30-50 m/min | 5-10 m/min |
| | | Stretching temperature | 100-300°C | 100-200°C |
| | | Shaping temperature | 327-800°C | 200-300°C |
| | | Cooling temperature | 0-10°C | / |

It can be seen that, in the present invention, by multi-pass longitudinal stretching, heat treatment at a temperature exceeding a normal melting point and cooling processes, the regular crystal arrangement gradually disappears at a temperature higher than the melting point of PTFE; and at the beginning of cooling, the regular molecular arrangement is generated to form a crystal structure.
II. Table 7 shows the comparison data of the enhanced membrane manufactured by the present invention and the fuel battery membrane enhanced by the e-PTFE microfiltration membrane manufactured by the conventional Manufacturing method.

**Table 7**

| | Test item | Unit | Use of the membrane manufactured by the present invention as an enhanced membrane | Use of the conventional membrane as an enhanced membrane |
|---|---|---|---|---|
| | | | Test index | |
| 1 | Elastic modulus(TD/MD) | MPa | 300-500 | 100-200 |
| 2 | Tensile Strength(TD/MD) | MPa | 25-40 | 10-15 |
| 3 | Yield(TD/MD) | MPa | >15 | <10 |
| 4 | Electrical conductivity 85°C 50%RH | mS/cm | 50-80 | <50 |
| 5 | Operating time in the electric pile | h | >5000 | <2000 |

It can be seen that the enhanced membrane manufactured by the present invention can enable the battery isolation membrane to realize better dimensional stability and higher mechanical performance, and can significantly reduce the internal resistance of batteries and improve the performance of batteries, reduce the consumption of membrane materials, and thus reduce the cost.

## Claims

1. A method of manufacturing an enhanced membrane for battery isolation, comprising following steps:
(1) mixing: adding, in a proportion of 23% to 27%, an isoparaffin lubricant to polytetrafluoroethylene (PTFE) powder, stirring uniformly, sieving and pouring the mixture into an insulation barrel, and maintaining at 40°C to 80°C for 24h to 48h;
(2) pressing: at a pressure of 2 to 10 MPa, pressing the temperature-maintained PTFE powder into a cylindrical blank;
(3) extruding: extruding the cylindrical blank at 40°C to 80°C through a fishtail-type die to form a continuous tape-like membrane having a width of 170 to 190 mm and a thickness of 1.8 to 2.2 mm;
(4) rolling: by keeping the width of the membrane unchanged, rolling the membrane in a longitudinal direction to obtain a PTFE tape-like membrane having a thickness of 0.18 to 0.22 mm;
(5) removing the lubricant: drying the PTFE tape-like membrane at 200°C to 250°C to remove the lubricant;
(6) multi-pass high-speed longitudinal stretching: performing multi-pass high-speed longitudinal stretching at a certain temperature, performing a heat treatment at a temperature exceeding the melting point of PTFE, then cooling and shaping at a low temperature;
(7) high-speed transverse stretching: performing high-speed transverse stretching at a certain temperature to expand PTFE, after the transverse stretching, rapidly heating PTFE to a temperature exceeding the melting point of PTFE and preserving this temperature for a certain period of time, shaping in a ultrahigh-temperature hot air furnace, and rapidly cooling.

2. The method according to claim 1, **characterized in that**, in the step (6), the temperature for the multi-pass high-speed longitudinal stretching is 100°C to 300°C, the longitudinal stretching is performed for 5 times, the longitudinal stretch ratio is 1 to 640, the speed for each longitudinal stretching is 30 to 50 m/min, the temperature for heat treatment after each longitudinal stretching is 327°C to 800°C, and the temperature for low-temperature cooling and shaping is 0°C to 10°C.

3. The method according to claim 1, **characterized in that**, during the multi-pass high-speed longitudinal stretching of the step (6), the first longitudinal stretching is performed at a stretch ratio of 1, the second longitudinal stretching is performed at a stretch ratio of 2, the third longitudinal stretching is performed at a stretch ratio of 4, the fourth longitudinal stretching is performed at a stretch ratio of 8, and the fifth longitudinal stretching is performed at a stretch ratio of 10.

4. The method according to claim 1, **characterized in that**, in the step (7), the temperature for the high-speed transverse stretching is 100°C to 300°C, and the stretching speed is 30 to 50 m/min.

5. The method according to claim 1, **characterized in that**, in the step (7), the temperature for ultrahigh-temperature shaping in the hot air furnace is 327°C to 800°C, and the temperature for low-temperature cooling and shaping is 0°C to 10°C.

6. The method according to claim 1, **characterized in that**, during mixing materials in the step (1), the added isoparaffin lubricant is in a proportion of 25%.

7. The method according to claim 1, **characterized in that**, during extruding in the step (3), the cylindrical blank is extruded to obtain a continuous tape-like membrane having a width of 180 mm and a thickness of 2.0 mm.

8. The method according to claim 1, **characterized in that**, in the step (4), the membrane is rolled to obtain a PTFE tape-like membrane having a thickness of 0.2 mm.

9. The method according to claim 1, **characterized in that**, in the step (7), after the transverse stretching, the membrane is rapidly heated to a temperature exceeding the melting point of PTFE and maintained at this temperature for a certain period of time, which is 2s to 6s.

## Patentansprüche

1. Ein Verfahren zum Herstellen einer verbesserten Membran zur Batterieisolation, das die folgenden Schritte beinhaltet:
(1) Mischen: Zugeben, zu einem Anteil von 23 % bis 27 %, eines Isoparaffingleitmittels zu Polytetrafluorethylen(PTFE)-Pulver, gleichmäßiges Rühren, Sieben und Gießen der Mischung in ein Dämmungsgefäß und Halten für 24 h bis 48 h auf 40 °C bis 80 °C;
(2) Pressen: mit einem Druck von 2 bis 10 MPa, Pressen des temperaturgehaltenen PTFE-Pulvers zu einem zylindrischen Rohling;
(3) Extrudieren: Extrudieren des zylindrischen Rohlings bei 40 °C bis 80 °C durch eine fischschwanzartige Düse, um eine kontinuierliche bandartige Membran mit einer Breite von 170 bis 190 mm und einer Dicke von 1,8 bis 2,2 mm zu bilden;
(4) Walzen: indem die Breite der Membran unverändert gelassen wird, Walzen der Membran in einer Längsrichtung, um eine bandartige PTFE-Membran mit einer Dicke von 0,18 bis 0,22 mm zu erhalten;
(5) Entfernen des Gleitmittels: Trocknen der bandartigen PTFE-Membran bei 200 °C bis 250 °C, um das Gleitmittel zu entfernen;
(6) schnelles Längsstrecken in mehreren Durchläufen: Durchführen eines schnellen Längsstreckens in mehreren Durchläufen bei einer gewissen Temperatur, Durchführen einer Wärmebehandlung bei einer Temperatur, die den Schmelzpunkt von PTFE übertrifft, dann Kühlen und Formen bei einer niedrigen Temperatur;
(7) schnelles Querstrecken: Durchführen eines schnellen Querstreckens bei einer gewissen Temperatur, um PTFE auszudehnen, nach dem Querstrecken rasches Erwärmen des PTFE auf eine Temperatur, die den Schmelzpunkt von PTFE übertrifft, und Aufrechterhalten dieser Temperatur für einen gewissen Zeitraum, Formen in einem Ultrahochtemperatur-Heißluftofen und rasches Kühlen.

2. Verfahren gemäß Anspruch 1, **dadurch gekennzeichnet, dass** in Schritt (6) die Temperatur für das schnelle Längsstrecken in mehreren Durchläufen 100 °C bis 300 °C beträgt, das Längsstrecken 5-mal durchgeführt wird, das Längsstreckverhältnis 1 bis 640 beträgt, die Geschwindigkeit für jedes Längsstrecken 30 bis 50 m/min beträgt, die Temperatur für die Wärmebehandlung nach jedem Längsstrecken 327 °C bis 800 °C beträgt und die Temperatur für das Niedrigtemperatur-Kühlen und -Formen 0 °C bis 10 °C beträgt.

3. Verfahren gemäß Anspruch 1, **dadurch gekennzeichnet, dass** während des schnellen Längsstreckens in mehreren Durchläufen aus Schritt (6) das erste Längsstrecken mit einem Streckverhältnis von 1 durchgeführt wird, das zweite Längsstrecken mit einem Streckverhältnis von 2 durchgeführt wird, das dritte Längsstrecken mit einem Streckverhältnis von 4 durchgeführt wird, das vierte Längsstrecken mit einem Streckverhältnis von 8 durchgeführt wird und das fünfte Längsstrecken mit einem Streckverhältnis von 10 durchgeführt wird.

4. Verfahren gemäß Anspruch 1, **dadurch gekennzeichnet, dass** in Schritt (7) die Temperatur für das schnelle Querstrecken 100 °C bis 300 °C beträgt und die Streckgeschwindigkeit 30 bis 50 m/min beträgt.

5. Verfahren gemäß Anspruch 1, **dadurch gekennzeichnet, dass** in Schritt (7) die Temperatur für das Ultrahochtemperatur-Formen in dem Heißluftofen 327 °C bis 800 °C beträgt und die Temperatur für das Niedrigtemperatur-Kühlen und -Formen 0 °C bis 10 °C beträgt.

6. Verfahren gemäß Anspruch 1, **dadurch gekennzeichnet, dass** während des Mischens von Materialien in Schritt (1) das zugegebene Isoparaffingleitmittel in einem Anteil von 25 % vorliegt.

7. Verfahren gemäß Anspruch 1, **dadurch gekennzeichnet, dass** während des Extrudierens in Schritt (3) der zylindrische Rohling extrudiert wird, um eine kontinuierliche bandartige Membran mit einer Breite von 180 mm und einer Dicke von 2,0 mm zu erhalten.

8. Verfahren gemäß Anspruch 1, **dadurch gekennzeichnet, dass** in Schritt (4) die Membran gewalzt wird, um eine bandartige PTFE-Membran mit einer Dicke von 0,2 mm zu erhalten.

9. Verfahren gemäß Anspruch 1, **dadurch gekennzeichnet, dass** in Schritt (7) nach dem Querstrecken die Membran rasch auf eine Temperatur erwärmt wird, die den Schmelzpunt von PTFE übertrifft, und für einen gewissen Zeitraum, der 2 s bis 6 s beträgt, auf dieser Temperatur gehalten wird.

## Revendications

1. Un procédé de fabrication d'une membrane renforcée pour l'isolement de batterie, comprenant les étapes suivantes :
(1) mélange : ajouter, dans une proportion de 23 % à 27 %, un lubrifiant isoparaffine à une poudre de polytétrafluoroéthylène (PTFE), agiter uniformément, tamiser et verser le mélange dans un support isolant, et maintenir à de 40 °C à 80 °C pendant 24 h à 48 h ;
(2) pressage : à une pression de 2 à 10 MPa, presser la poudre PTFE maintenue à température en une ébauche cylindrique ;
(3) extrusion : extruder l'ébauche cylindrique à de 40 °C à 80 °C au travers d'une filière de type queue de carpe afin de former une membrane continue semblable à un ruban ayant une largeur de 170 à 190 mm et une épaisseur de 1,8 à 2,2 mm ;
(4) laminage : en gardant la largeur de la membrane inchangée, laminer la membrane dans une direction longitudinale afin d'obtenir une membrane en PTFE semblable à un ruban ayant une épaisseur de 0,18 à 0,22 mm ;
(5) retrait du lubrifiant : faire sécher la membrane en PTFE semblable à un ruban à de 200 °C à 250 °C pour retirer le lubrifiant ;
(6) étirement longitudinal haute vitesse à passages multiples : effectuer un étirement longitudinal haute vitesse à passages multiples à une certaine température, effectuer un traitement thermique à une température excédant le point de fusion du PTFE, puis refroidir et mettre en forme à basse température ;
(7) étirement transversal haute vitesse : effectuer un étirement transversal haute vitesse à une certaine température pour expanser le PTFE, après l'étirement transversal, chauffer rapidement le PTFE jusqu'à une température excédant le point de fusion du PTFE et conserver cette température pendant un certain laps de temps, mettre en forme dans un fourneau à air chaud ultra-haute température, et refroidir rapidement.

2. Le procédé selon la revendication 1, **caractérisé en ce que**, dans l'étape (6), la température pour l'étirement longitudinal haute vitesse à passages multiples est de 100 °C à 300 °C, l'étirement longitudinal est effectué 5 fois, le rapport d'étirage longitudinal est de 1 à 640, la vitesse pour chaque étirement longitudinal est de 30 à 50 m/min, la température pour le traitement thermique après chaque étirement longitudinal est de 327 °C à 800 °C, et la température pour le refroidissement et la mise en forme à basse température est de 0 °C à 10 °C.

3. Le procédé selon la revendication 1, **caractérisé en ce que**, durant l'étirement longitudinal haute vitesse à passages multiples de l'étape (6), le premier étirement longitudinal est effectué à un rapport d'étirage de 1, le deuxième étirement longitudinal est effectué à un rapport d'étirage de 2, le troisième étirement longitudinal est effectué à un rapport d'étirage de 4, le quatrième étirement longitudinal est effectué à un rapport d'étirage de 8, et le cinquième étirement longitudinal est effectué à un rapport d'étirage de 10.

4. Le procédé selon la revendication 1, **caractérisé en ce que**, dans l'étape (7), la température pour l'étirement transversal haute vitesse est de 100 °C à 300 °C, et la vitesse d'étirement est de 30 à 50 m/min.

5. Le procédé selon la revendication 1, **caractérisé en ce que**, dans l'étape (7), la température pour la mise en forme à ultra-haute température dans le fourneau à air chaud est de 327 °C à 800 °C, et la température pour le refroidissement et la mise en forme à basse température est de 0 °C à 10 °C.

6. Le procédé selon la revendication 1, **caractérisé en ce que**, durant le mélange de matériaux dans l'étape (1), le lubrifiant isoparaffine ajouté l'est dans une proportion de 25 %.

7. Le procédé selon la revendication 1, **caractérisé en ce que**, durant l'extrusion dans l'étape (3), l'ébauche cylindrique est extrudée afin d'obtenir une membrane continue semblable à un ruban ayant une largeur de 180 mm et une épaisseur de 2,0 mm.

8. Le procédé selon la revendication 1, **caractérisé en ce que**, dans l'étape (4), la membrane est laminée afin d'obtenir une membrane en PTFE semblable à un ruban ayant une épaisseur de 0,2 mm.

9. Le procédé selon la revendication 1, **caractérisé en ce que**, dans l'étape (7), après l'étirement transversal, la membrane est rapidement chauffée jusqu'à une température excédant le point de fusion du PTFE et maintenue à cette température pendant un certain laps de temps, lequel dure de 2 s à 6 s.
